(19) Europäisches Patentamt

European Patent Office

Office européen des brevets

(11) **EP 2 857 664 B1**

(12) **EUROPEAN PATENT SPECIFICATION**

(45) Date of publication and mention
of the grant of the patent:
**26.04.2017 Bulletin 2017/17**

(21) Application number: **13794026.8**

(22) Date of filing: **22.05.2013**

(51) Int Cl.:
*F02D 45/00* *(2006.01)*     *F02D 21/08* *(2006.01)*
*F02D 23/00* *(2006.01)*     *F02D 41/22* *(2006.01)*
*F02M 26/00* *(2016.01)*     *F02D 41/00* *(2006.01)*
*F02B 29/04* *(2006.01)*     *G01M 15/04* *(2006.01)*
*G01K 13/02* *(2006.01)*     *F02M 26/28* *(2016.01)*
*F02M 26/47* *(2016.01)*

(86) International application number:
**PCT/JP2013/003247**

(87) International publication number:
**WO 2013/175779 (28.11.2013 Gazette 2013/48)**

(54) **FAULT DETECTION METHOD**

FEHLERERKENNUNGSVERFAHREN

PROCÉDÉ DE DÉTECTION DE DÉFAUT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2012 JP 2012119158**

(43) Date of publication of application:
**08.04.2015 Bulletin 2015/15**

(73) Proprietor: **Hino Motors, Ltd.
Hino-shi, Tokyo 191-8660 (JP)**

(72) Inventor: **NAKANO, Hitoshi
Hino-shi
Tokyo 191-8660 (JP)**

(74) Representative: **Louis Pöhlau Lohrentz
Patentanwälte
Postfach 30 55
90014 Nürnberg (DE)**

(56) References cited:
**EP-A2- 1 548 260**     **EP-B1- 2 326 819**
**WO-A1-2010/073566**     **DE-A1-102007 049 117**
**DE-A1-102008 001 418**     **JP-A- 2001 164 999**
**JP-A- 2005 188 479**     **JP-A- 2006 242 080**
**JP-A- 2009 167 927**

**Description**

Technical Field

The present invention relates to a fault detection method for use in an internal combustion engine.

Background Art

With respect to a vehicle engine or the like, so-called exhaust gas recirculation (EGR) has been employed in which part of exhaust gas is extracted from an exhaust side and is returned to an intake side as EGR gas which in turn suppresses combustion of fuel in the engine and lowers a combustion temperature, thereby reducing $NO_x$ generated.
Generally, in order to conduct such kind of exhaust gas recirculation, an appropriate portion in an exhaust passage extending from an exhaust manifold to an exhaust pipe is connected to an appropriate portion in an intake passage extending from an intake pipe to an intake manifold by an EGR pipe for recirculation of the EGR gas therethrough.
The EGR pipe is equipped midway thereof with a water-cooled EGR cooler since cooling, midway of the EGR pipe, of the EGR gas to be recirculated to the engine will drop a temperature of and reduce a volume of the EGR gas to lower a combustion temperature without substantial decrease in output of the engine, thereby effectively suppressing generation of $NO_x$ (nitrogen oxides).
Meanwhile, an on-board fault diagnosis equipment called OBD system (On Board Diagnostic System) may be boarded on a vehicle nowadays such that the vehicle itself detects and monitors any fault (sudden malfunction) of exhaust emission control equipment, make alarm display of any occurring fault to a driver, and store particulars of the fault.
A prior art reference for such kind of technique for detecting any characteristic fault of sensors is, for example, the following Patent Literature 1 by the same applicant as that of the present invention.

Citation List

Patent Literature

[Patent Literature 1] JP 2010-151039A

Summary of Invention

Technical Problems

Since exhaust emission control technique is to be further highly refined from now, it has been demanded to determine whether any characteristic fault is occurring or not with respect to an intercooler exit temperature sensor for detection of an intake temperature on an exit side of the intercooler, an intake manifold temperature sensor for detection of the intake temperature at an intake manifold and an EGR exit temperature sensor for detection of an EGR gas temperature on an exit side of the EGR cooler. It is, however, difficult to accurately determine whether any characteristic fault is occurring in the intercooler exit temperature sensor, the intake manifold temperature sensor or the EGR exit temperature sensor.
Specifically, technique having been employed up to the present for determination on any characteristic fault of sensors is that occurrence of characteristic fault is determined when a very unlikely value is indicated under a specific operational condition. However, with respect to the intercooler exit temperature sensor, the intake manifold temperature sensor and the EGR exit temperature sensor as mentioned in the above, undeniable is a possibility that the abnormal value is outputted under influence of deterioration with time of the intercooler and/or the EGR cooler arranged upstream. Thus, it has been difficult to accurately determine occurrence of fault in any of the intercooler exit temperature sensor, the intake manifold temperature sensor, the EGR exit temperature sensor, the intercooler and the EGR cooler.
The deterioration with time of the intercooler mentioned in the above refers to lowered heat exchange efficiency due to accumulation with time of, for example, foreign matters contained in the intake or oil leaking from the turbocharger on a heat-transfer surface in a core of the intercooler. The deterioration with time of the EGR cooler refers to lowered heat exchange efficiency due to accumulation with time of soot contained in exhaust gas on an inner periphery of a heat-transfer tube of the EGR cooler (generally, the EGR cooler is in the form of a shell-and-tube heat exchanger).
The invention was made in view of the above and has its object to provide a fault detection device which can accurately determine fault on any of an intercooler exit temperature sensor, an intake manifold temperature sensor, an EGR exit temperature sensor, an intercooler and an EGR cooler.

Solution to Problems

The invention is directed to a fault detection method with a precondition that an intake temperature on an entry side of an intercooler, an ambient temperature, an EGR gas temperature on an entry side of an EGR cooler and a cooling water temperature into the EGR cooler have been determined to be normally detected, which comprises calculating intercooler efficiency on the basis of the intake temperature on the entry side of the intercooler, an intake temperature on an exit side of the intercooler and the ambient temperature, calculating EGR cooler efficiency on the basis of the EGR gas temperature on the entry side of the EGR cooler, an EGR gas temperature on an exit side of the EGR cooler and the cooling water temperature, and determining whether a calculated value of an intake temperature at an intake manifold on the basis of a current EGR ratio, the EGR gas temperature on the exit side of the EGR cooler and the intake temperature on the exit side of the intercooler deviates from an actually measured value thereof or not, and identifying a fault place in an intake system by comparing three elements mentioned in the above, i.e., the intercooler efficiency, the EGR cooler efficiency and any deviation of the calculated value of the intake temperature at the intake manifold from the actually measured value,

characterized in that, on condition that a calculated value of the intercooler efficiency is outside normal limits and a calculated value of the EGR cooler efficiency is within normal limits, if the calculated value of the intake temperature at the intake manifold deviates from the actually measured value thereof, an intercooler exit temperature sensor for detection of the intake temperature on the exit side of the intercooler is determined to have fault whereas if the calculated value of the intake temperature at the intake manifold does not deviate from the actually measured value thereof, the intercooler itself is determined to have fault;

on condition that the calculated value of the intercooler efficiency is within the normal limits and the calculated value of the intake temperature at the intake manifold deviates from the actually measured value thereof, if the calculated value of the EGR cooler efficiency is within the normal limits, an intake manifold temperature sensor for detection of the intake temperature at the intake manifold is determined to have fault whereas if the calculated value of the EGR cooler efficiency is outside the normal limits, the EGR exit temperature sensor for detection of EGR gas temperature on the exit side of the EGR cooler is determined to have fault; and

on condition that the calculated value of the intercooler efficiency is within the normal limits and the calculated value of the intake temperature at the intake manifold does not deviate from the actually measured value thereof, if the calculated value of the EGR cooler efficiency is outside the normal limits, the EGR cooler itself is determined to have fault whereas if the calculated value of the EGR cooler efficiency is within the normal limits, all of an intercooler exit temperature sensor, the intercooler, the intake manifold temperature sensor, an EGR exit temperature sensor and the EGR cooler are determined to be normal.

Thus, on condition that the calculated value of the intercooler efficiency is outside the normal limits while the calculated value of the EGR cooler efficiency is within the normal limits with the intake temperature on the entry side of the intercooler and the ambient temperature being determined to be normally detected, then conceivable are only two causes thereof, that is, fault of the intercooler exit temperature sensor and fault of the intercooler itself. If the former is the cause, i.e., if the intercooler exit temperature sensor has fault, then the calculated value of the intake manifold temperature sensor downstream is to be abnormal and is to deviate from the actually measured value thereof; and if the latter is the cause, i.e., if the intercooler itself has fault, such deviation is not to occur.

As a result, on condition that the calculated value of the intercooler efficiency is outside the normal limits and the calculated value of the EGR cooler efficiency is within normal limits, if the calculated value of the intake temperature at the intake manifold deviates from the actually measured value thereof, then the intercooler exit temperature sensor for detection of the intake temperature on the exit side of the intercooler can be determined to have fault whereas if the calculated value of the intake temperature at the intake manifold does not deviate from the actually measured value thereof, then the intercooler itself can be determined to have fault.

Meanwhile, on condition that the calculated value of the intercooler efficiency is within the normal limits, the intercooler exit temperature sensor and the intercooler itself are conceived to be normal. However, on condition that the calculated value of the intercooler efficiency is within the normal limits and the calculated value of the intake temperature at the intake manifold deviates from the actually measured value thereof, then conceivable are two causes thereof, that is, fault of the intake manifold temperature sensor and fault of the EGR exit temperature sensor.

If the former is the cause, i.e., if the intake manifold temperature sensor has fault, then the calculated value of the EGR cooler efficiency not affected by the detected value of the intake manifold temperature sensor is to be within the normal limits. If the latter is the cause, i.e., if the EGR exit temperature sensor has fault, then the calculated value of the EGR cooler efficiency is to be outside the normal limits.

As a result, on condition that the calculated value of intercooler efficiency is within the normal limits and the calculated value of the intake temperature at the intake manifold deviates from the actually measured value thereof, if the calculated value of the EGR cooler efficiency is within the normal limits, then the intake manifold temperature sensor for detection of the intake temperature at the intake manifold can be determined to have fault whereas if the calculated value of the EGR cooler efficiency is outside the normal limits, then the EGR exit temperature sensor for detection of the EGR gas temperature on the exit side of the EGR cooler can be determined to have fault.

Further, on condition that the calculated value of the intercooler efficiency is within the normal limits and the calculated value of the intake temperature at the intake manifold does not deviate from the actually measured value thereof, the intake manifold temperature sensor and the EGR exit temperature sensor are conceived to be normal. On condition that the calculated value of the intercooler efficiency is within the normal limits and the calculated value of the intake temperature at the intake manifold does not deviate from the actually measured value thereof, if the calculated value of the EGR cooler efficiency is outside the normal limits, then conceivable is only a cause thereof, i.e., fault of the EGR cooler itself.

As a result, on condition that the calculated value of the intercooler efficiency is within the normal limits and the calculated value of the intake temperature at the intake manifold does not deviate from the actually measured value thereof, if the calculated value of the EGR cooler efficiency is outside the normal limit, then the EGR cooler itself can be determined to have fault.

Meanwhile, on condition that the calculated value of intercooler efficiency is within the normal limits and the calculated value of the intake temperature at the intake manifold does not deviate from the actually measured value thereof, if the calculated value of the EGR cooler efficiency is within the normal limits, it is conceived that no fault occurs at all. Thus, all of the intercooler exit temperature sensor, the intercooler, the intake manifold temperature sensor, the EGR exit temperature sensor and the EGR cooler can be determined to be normal.

In the invention, on condition that the calculated value of the intercooler efficiency is low outside the normal limits and the calculated value of the EGR cooler efficiency is within the normal limits, if the calculated value of the intake temperature at the intake manifold deviates high from the actually measured value thereof, then the intercooler exit temperature sensor can be determined to have characteristic fault of erroneously detecting the intake temperature higher than an actual intake temperature. On condition that the calculated value of the intercooler efficiency is high outside the normal limits and the calculated value of the EGR cooler efficiency is within the normal limits, if the calculated value of the intake temperature at the intake manifold deviates low from the actually measured value thereof, the intercooler exit temperature sensor can be determined to have characteristic fault of erroneously detecting the intake temperature lower than the actual intake temperature.

Further, in the invention, on condition that the calculated value of the intercooler efficiency is within the normal limits and the calculated value of the intake temperature at the intake manifold deviates high from the actually measured value thereof, if the calculated value of the EGR cooler efficiency is low outside the normal limits, then the EGR exit temperature sensor can be determined to have characteristic fault of erroneously detecting the EGR gas temperature higher than the actual EGR gas temperature. On condition that the calculated value of the intercooler efficiency is within the normal limits and the calculated value of the intake temperature at the intake manifold deviates low from the actually measured value thereof, if the calculated value of the EGR cooler efficiency is high outside the normal limits, then the EGR exit temperature sensor can be determined to have characteristic fault of erroneously detecting the EGR gas temperature lower than the actual EGR gas temperature.

Further, in the invention, on condition that the calculated value of the intercooler efficiency is within the normal limits and the calculated value of the intake temperature at the intake manifold deviates high from the actually measured value thereof, if the calculated value of the EGR cooler efficiency is within the normal limits, then the intake manifold temperature sensor can be determined to have characteristic fault of erroneously detecting the intake temperature higher than the actual intake temperature. On condition that the calculated value of the intercooler efficiency is within the normal limits and the calculated value of the intake temperature at the intake manifold deviates low from the actually measured value thereof, if the calculated value of the EGR cooler efficiency is within the normal limits, then the intake manifold temperature sensor can be determined to have characteristic fault of erroneously detecting the intake temperature lower than the actual intake temperature.

Advantageous Effects of Invention

According to a fault detection method of the invention, excellent effects can be obtained as follows.

(I) According to the invention, comparison of the three elements, i.e., the intercooler efficiency, the EGR cooler efficiency and any deviation of the calculated value of the intake temperature at the intake manifold from the actually measured value thereof makes it possible to accurately determine whether any of the intercooler exit temperature sensor, the intake manifold temperature sensor, the EGR exit temperature sensor, the intercooler and the EGR cooler has fault while consideration is made on a possibility that the values to be detected are affected to be abnormal by deterioration with time of the intercooler or the EGR cooler. Establishment of such a fault detection method can contribute to formulation of an OBD system (On Board Diagnostic System) dealing with exhaust emission control technique expected to be further highly refined from now.

(II) According to the invention, as to identification of any fault in the intercooler exit temperature sensor, it is possible to go so far as to determine whether the intercooler exit temperature sensor has characteristic fault of erroneously detecting the intake temperature higher or lower than an actual intake temperature.

(III) According to the invention, as to identification of any fault in the intake manifold temperature sensor, it is possible to go so far as to determine whether the intake manifold temperature sensor has characteristic fault of erroneously detecting the intake temperature higher or lower than an actual intake temperature.

(IV) According to the invention, as to identification of any fault in the EGR exit temperature sensor, it is possible to go so far as to determine whether the EGR exit temperature sensor has characteristic fault of erroneously detecting the EGR gas temperature higher or lower than an actual EGR gas temperature.

Brief Description of Drawings

Fig. 1 is an overall schematic view showing an embodiment of the invention;
Fig. 2 is a graph showing a relationship between polytropic index and intake flow rate; and
Fig. 3 is a fault determination table used in the controller shown in Fig. 1.

Description of Embodiment

An embodiment of the invention will be described in conjunction with the drawings.

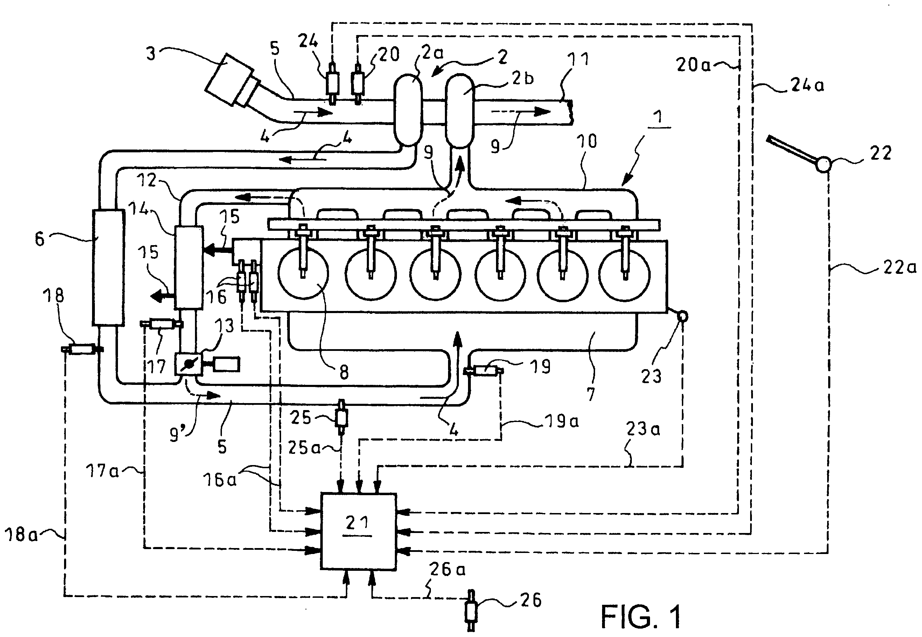

Fig. 1 shows the embodiment of the invention. In Fig. 1, reference numeral 1 denotes an engine with a turbocharger 2 having a compressor 2a to which intake air 4 from an air cleaner 3 is guided through an intake pipe 5. The intake air 4 compressed by the compressor 2a is guided to an intercooler 6 where the intake air 4 is cooled, and is further guided to an intake manifold 7 so as to be distributed to respective cylinders 8 of the engine 1.

Exhaust gas 9 from the respective cylinders 8 of the engine 1 is guided through an exhaust manifold 10 to a turbine 2b of the turbocharger 2. After driving the turbine 2b, the exhaust gas 9 is discharged outside of a vehicle through an exhaust pipe 11.

An end of the exhaust manifold 10 in a lined-up direction of the cylinders 8 is connected through an EGR pipe 12 to the intake pipe 5 downstream of the intercooler 6 so as to extract part of the exhaust gas 9 as EGR gas 9' from the exhaust manifold 10 into the intake pipe 5.

The EGR pipe 12 is provided with an EGR valve 13 for proper opening and closing of the EGR pipe 12 and with an EGR cooler 14 for cooling of the EGR gas 9' flowing through the EGR pipe 12. In the EGR cooler 14, the EGR gas 9' can be lowered in temperature through heat exchange with cooling water 15 guided from the engine 1.

A temperature of the cooling water 15 flowing into the EGR cooler 14 is detected by two cooling water temperature sensors 16 arranged in a same location on a front portion of the engine 1. An exhaust temperature at an exit of the gas EGR cooler 14 is detected by an EGR exit temperature sensor 17. A temperature of the intake air 4 having passed through the intercooler 6 is detected by an intercooler exit temperature sensor 18. A temperature of the intake air 4 mixed with the EGR gas 9' and guided to the intake manifold 7 is detected by an intake manifold temperature sensor 19. A temperature and a flow rate of the intake air 4 (fresh air) guided from the air cleaner 3 are detected by an intake temperature sensor 20 and an intake flow rate sensor 24, respectively.

Here, for convenience of explanation, the intake temperature and flow rate sensors 20 and 24 are separately disclosed. However, actually a temperature of the intake air 4 (fresh air) is required for obtaining a flow rate of the intake air 4, so that it is usual that the intake temperature sensor 20 is built in the intake flow rate sensor 24.

A boost pressure of the intake air 4 guided to the intake manifold 7 is detected by a boost pressure sensor 25 incorporated in the intake pipe 5 adjacent to the intake manifold 7, and an atmospheric pressure is detected by an atmospheric pressure sensor 26 arranged at an appropriate site less effected by aerodynamic drag.

Inputted to a controller 21 constituting an engine control computer (ECU: Electronic Control Unit) are detection signals 16a, 17a, 18a, 19a, 20a, 24a, 25a and 26a from the cooling water temperature sensor 16, the EGR exit temperature sensor 17, the intercooler exit temperature sensor 18, the intake manifold temperature sensor 19, the intake temperature sensor 20, the intake flow rate sensor 24, the boost pressure sensor 25 and the atmospheric pressure sensor 26, respectively.

Also inputted to the controller 21 are a detection signal 22a from an accelerator sensor 22 for detecting an accelerator opening degree as load of the engine 1 as well as a detection signal 23a from a rotation sensor 23 for detecting a rotational frequency of the engine 1.

In the controller 21, with a precondition that the intake temperature on the entry side of the intercooler 6, the ambient temperature, the EGR gas temperature on the entry side of the EGR cooler 14 and the cooling water temperature into the EGR cooler 14 are determined to be normally detected, intercooler efficiency is calculated on the basis of the intake temperatures on the entry and exit sides of the intercooler 6 and the ambient temperature; EGR cooler efficiency is calculated on the basis of the EGR gas temperatures on the entry and exit sides of the EGR cooler 14 and the cooling water temperature; and determination is made on whether a calculated value of the intake temperature at the intake manifold 7 on the basis of a current EGR ratio, the EGR gas temperature on the exit side of the EGR cooler 14 and the intake temperature on the exit side of the intercooler 6 deviates from an actually measured intake temperature value thereof or not. Then, a fault place in the intake system is specified by comparing these three elements, i.e., the intercooler efficiency, the EGR cooler efficiency and any deviation of the calculated value of the intake temperature at the intake manifold 7 from the actually measured value thereof.

In the embodiment, for calculation of the intercooler efficiency, compressor work in the turbocharger 2 is grasped as thermodynamic polytropic change and a relational expression which holds in the polytropic change is used to estimate exit gas temperature of the compressor 2a which is used as an intake temperature on the entry side of the intercooler 6.

Specifically, the intake temperature on the exit side of the compressor 2a may be calculated using the following equation (1) converted from the relational expression which holds in the polytropic change:

$$\text{intake temperature } T_2 \text{ on the exit side of the compressor } =$$

$$T_1 \times (P_2 \ / \ P_1)^{((\gamma-1) \ / \ \gamma)} \quad ... \quad (1)$$

where

$T_2$: exit gas temperature of the compressor = the intake temperature on the entry side of the intercooler;
$T_1$: entry gas temperature of the compressor = detected value of the intake temperature sensor;
$P_2$: exit pressure of the compressor = detected value of the boost pressure sensor;
$P_1$: entry pressure of the compressor = detected value of the atmospheric pressure sensor; and
$\gamma$: polytropic index.

For estimation of the exit gas temperature of the compressor 2a (the intake temperature on the entry side of the intercooler) using the equation (1), an actually measured atmospheric pressure value detected by the atmospheric pressure sensor 26 is used as the entry pressure of the compressor 2a. An actually measured boost pressure value detected by the boost pressure sensor 25 is used as the exit pressure of the compressor 2a. An ambient temperature detected by the intake temperature sensor 20 is used as entry gas temperature of the compressor 2a. In terms of the intake flow rate before supercharging detected by the intake flow rate sensor 24, polytropic index may be determined for use on the basis of test data.

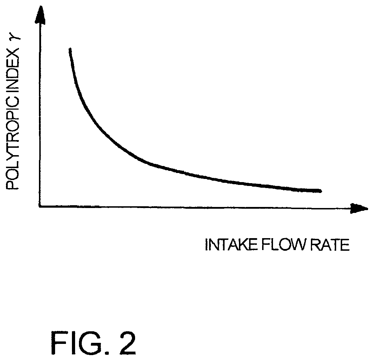

For example, a relationship between the polytropic index and the intake flow rate is represented by a graph as shown in Fig. 2. By grasping such relationship between the polytropic index and the intake flow rate beforehand in testing, the polytropic index may be determined, using the intake flow rate before supercharging detected by the intake flow rate sensor 24.

The exit gas temperature of the compressor 2a calculated by the equation (1) is used as the intake temperature on the entry side of intercooler 6 for calculation of intercooler efficiency to be referred to hereinafter. The intake temperature on the entry side of the intercooler 6 thus obtained is determined to be normally detected in a way described hereinafter.

First of all, the atmospheric pressure and the boost pressure are determined to be normally detected by confirming that actually measured values of the atmospheric and boost pressure sensors 26 and 25 are the same during the engine 1 being stopped. The ambient temperature may be determined to be normally detected by confirming that the actually measured value of the intake temperature sensor 20 at cold start of the engine is the same as the actually measured values of the intercooler exit temperature sensor 18, the intake manifold temperature sensor 19 and the EGR exit temperature sensor 17.

Specifically, at cold start of the engine 1 where the engine 1 is extremely cold, control with prior attention to warming is conducted with the EGR valve 13 being closed. Thus, temperatures detected by the intercooler exit temperature sensor 18, the intake manifold temperature sensor 19 and the EGR exit temperature sensor 17 are all the same and are to be the same as the ambient temperature; and are to be the same as the detected value of the intake temperature sensor 20 for detection of the ambient temperature.

Thus, if the four sensors, i.e., the intake temperature sensor 20, the intercooler exit temperature sensor 18, the intake manifold temperature sensor 19 and the EGR exit temperature sensor 17 have the same detected value, detection is determined to be normal with respect to these four sensors at least in an ordinary temperature range.

As to the intake temperature sensor 20 which is always used in the ordinary temperature range, the detection is reliably determined to be normal and the detected ambient temperature is determined to be normal. However, with respect to the other sensors, i.e., the intercooler exit temperature sensor 18, the intake manifold temperature sensor 19 and the EGR exit temperature sensor 17, required is further determination as mentioned hereinafter for use in a high-temperature range.

Further, as to the intake flow rate before supercharging, the intake flow rate may be determined to be normally detected by confirming that, on condition where control with prior attention to warming is conducted at cold start with the EGR valve 13 being closed, operational gas flow rate in the cylinders obtained from the revolution frequency of the engine 1 and the intake temperature of the intake manifold 7 is the same as the actually measured value of the intake flow rate sensor 24.

The revolution frequency of the engine 1 used is that detected by the rotation sensor 23. It is usual that engine 1 is provided with not only the rotation sensor 23 (main rotation sensor) as shown but also a crank angle sensor (not shown). Therefore, the revolution frequency may be determined to be normally detected by confirming that the detected value of the rotation sensor 23 is the same as a revolution frequency detected by the crank angle sensor. The intake temperature of the intake manifold 7 used is determined to be normally detected by the above-mentioned confirmation of the four sensors at cold start of the engine 1.

Under a condition that the intake temperature on the entry side of the intercooler 6 and the ambient temperature are determined to be normally detected as mentioned in the above, the intercooler efficiency is calculated on the basis of the calculated value of the intake temperature on the entry side of the intercooler 6 by the equation (1), the actually measured intake temperature value on the exit side of the intercooler 6 detected by the intercooler exit temperature sensor 18 and the actually measured value of the ambient temperature detected by the intake temperature sensor 20.

Here, the intercooler efficiency is calculated by the following equation (2).

$$\text{intercooler efficiency}$$
$$= (T_{ICIN} - T_{ICOUT}) / (T_{ICIN} - T_{AMBIENT}) \times 100 \ ... \ (2)$$

where

$T_{ICIN}$: intake temperature on the entry side of the intercooler;
$T_{ICOUT}$ : intake temperature on the exit side of the intercooler; and
$T_{AMBIENT}$ : ambient temperature.

The EGR gas temperature on the entry side of the EGR cooler 14 may be calculated from the revolution frequency and load of the engine 1. In this respect, the revolution frequency of the engine 1 is determined to be normally detected by confirming as mentioned in the above that the rotation sensor 23 is determined to be normal; and the load of the engine 1 is determined to be normally detected by confirming that the revolution frequency is stable during idling and that an indicated value of fuel injection (indicated injection value) is proper for intended retaining of a predetermined idling revolution frequency. When the revolution frequency and the load of the engine 1 are determined to be normally detected, the calculated EGR gas temperature on the entry side of the EGR cooler 14 on the basis of them is also determined to be normally detected.

Further, the cooling water temperature into the EGR cooler 14 is determined to be normally detected by confirming that the two cooling water temperature sensors 16 has the same detected values. Thus, under condition that the EGR gas temperature on the entry side of the EGR cooler 14 and the cooling water temperature into the EGR cooler 14 are determined to be normally detected, the EGR cooler efficiency is calculated on the basis of the EGR gas temperature on the entry side of the EGR cooler 14 calculated from the revolution frequency and the load of the engine 1, the actually measured value of the EGR gas temperature on the exit side of the EGR cooler 14 by the EGR exit temperature sensor 17 and the actually measured value of the cooling water temperature sensor 16.

Here, the EGR cooler efficiency is calculated by the following equation (3):

$$\text{EGR cooler efficiency}$$
$$= (T_{GEGRIN} - T_{GEGROUT}) / (T_{GEGRIN} - T_{WEGRCIN}) \times 100 \ ... \ (3)$$

where

$T_{GEGRIN}$ : EGR gas temperature on the entry side of the EGR cooler;
$T_{GEGROUT}$ : EGR gas temperature on the exit side of the EGR cooler; and
$T_{WEGRCIN}$ : cooling water temperature into the EGR cooler

A temperature of the intake air 4 mixed with the EGR gas 9' and guided to the intake manifold 7 is actually detected by the intake manifold temperature sensor 19 while an intake temperature to be detected by the intake temperature sensor 19 is calculated on the basis of a current EGR ratio, the actually measured value of the EGR exit temperature sensor 17 and the actually measured value by the intercooler exit temperature sensor 18, thereby determining whether the actually detected value by the intake manifold temperature sensor 19 deviates from the calculated value of the intake temperature to be detected by the intake manifold temperature sensor 19 or not.

Here, the intake temperature to be detected by the intake manifold temperature sensor 19 is calculated from the following equation (4):

$$\text{intake temperature to be detected by the intake manifold temperature sensor 19}$$

$$= (\text{EGR ratio} \times (T_{GEGROUT} - T_{GICOUT}])) + T_{GICOUT} \cdots (4)$$

where

$T_{GEGROUT}$ : exhaust temperature on the exit side of the EGR cooler; and
$T_{GICOUT}$ : intake temperature on the exit side of the intercooler

As to the EGR ratio used for the equation (4), for example, a volume of the respective cylinders 8 is multiplied by the revolution frequency of the engine 1 and by a pump efficiency to obtain a swallowing flow rate of the engine 1 from which subtracted is the actually measured value of the intake flow rate sensor 24 (fresh air amount) to obtain a recirculation amount of the EGR gas 9'. A fraction having the recirculation amount and the swallowing flow rate as a numerator and a denominator, respectively, may be used as EGR ratio.

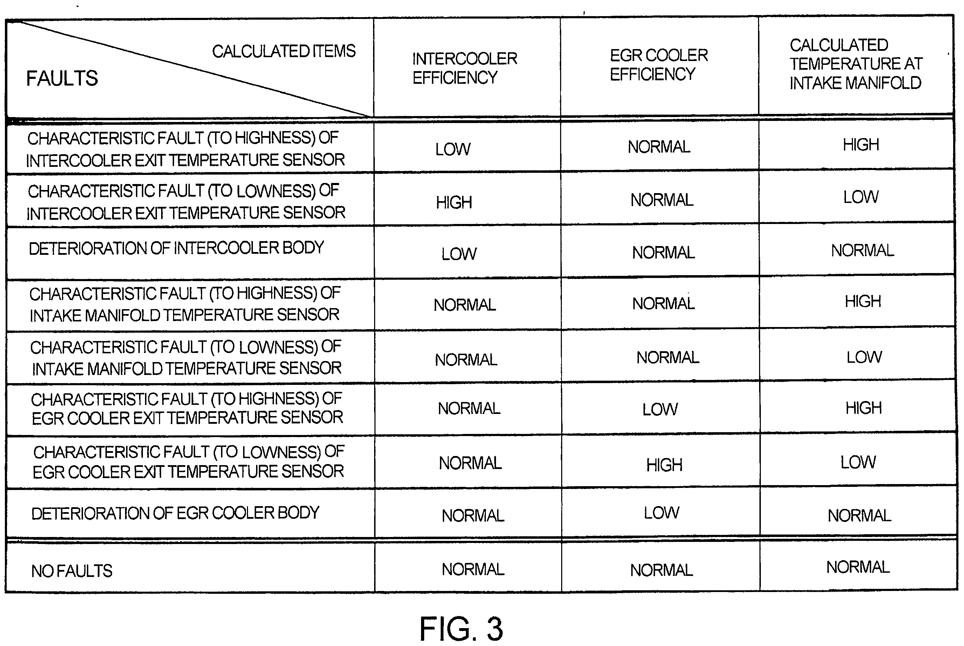

Thus, the three elements, i.e., the intercooler efficiency, the EGR cooler efficiency and any deviation of the calculated value of the intake temperature of the intake manifold from the actually measured value thereof are obtained. Then, the three elements are compared in view of the fault determination table as shown in Fig. 3 in the controller 21, and fault on any of the intercooler exit temperature sensor 18, the intake manifold temperature sensor 19, the EGR exit temperature sensor 17, the intercooler 6 and the EGR cooler 14 is identified as follows.

For example, on condition that the calculated value of the intercooler efficiency is outside normal limits and a calculated value of the EGR cooler efficiency is within normal limits, if the calculated value of the intake temperature at the intake manifold 7 deviates from the actually measured value thereof, then the intercooler exit temperature sensor 18 for detection of the intake temperature on the exit side of the intercooler 6 is determined to have fault whereas if the calculated value of the intake temperature at the intake manifold 7 does not deviate from the actually measured value thereof, then the intercooler 6 itself is determined to have fault.

Because, on condition that the calculated value of the intercooler efficiency is outside the normal limits while the calculated value of EGR cooler efficiency is within the normal limits with the intake temperature on an entry side of intercooler 6 and the ambient temperature being determined to be normally detected, then conceivable are only two causes thereof, that is, fault of the intercooler exit temperature sensor 18 and fault of the intercooler 6 itself. If the former is the cause, i.e., the intercooler exit temperature sensor 18 has fault, then the calculated value for the intake manifold temperature sensor 19 downstream is to be abnormal and is to deviate from the actually measured value; and if the latter is the cause, i.e., the intercooler 6 itself has fault, such deviation is not to occur.

As a result, on condition that the calculated value of the intercooler efficiency is outside the normal limits and the calculated value of the EGR cooler efficiency is within the normal limits, if the calculated value of the intake temperature at the intake manifold 7 deviates from the actually measured value thereof, then the intercooler exit temperature sensor 18 for detection of the intake temperature on the exit side of the intercooler 6 can be determined to have fault whereas if the calculated value of the intake temperature at the intake manifold 7 does not deviate from the actually measured value thereof, then the intercooler 6 itself can be determined to have fault.

Specifically, on condition that the calculated value of the intercooler efficiency is low outside the normal limits and the calculated value of the EGR cooler efficiency is within normal limits, if the calculated value of the intake temperature at the intake manifold 7 deviates high from the actually measured value thereof, then the intercooler exit temperature sensor 18 can be determined to have characteristic fault of erroneously detecting the intake temperature higher than the actually measured value. On condition that the calculated value of the intercooler efficiency is high outside the normal limits and the calculated value of the EGR cooler efficiency is within the normal limits, if the calculated value of the intake temperature at the intake manifold 7 deviates low from the actually measured value thereof, the intercooler exit temperature sensor 18 can be determined to have characteristic fault of erroneously detecting the intake temperature lower than the actually measured value.

Further, on condition that the calculated value of the intercooler efficiency is within the normal limits and the calculated value of the intake temperature at the intake manifold 7 deviates from the actually measured value thereof, if the calculated value of the EGR cooler efficiency is within the normal limits, then the intake manifold temperature sensor 19 for detection of the intake temperature of the intake manifold 7 is determined to have fault whereas if the calculated value of the EGR cooler efficiency is outside the normal limits, then the EGR exit temperature sensor 17 for detection of the EGR gas temperature on the exit side of the EGR cooler 14 is determined to have fault.

Because, on condition that the calculated value of intercooler efficiency is within the normal limits, the intercooler exit temperature sensor 18 and the intercooler 6 are conceived to be normal. However, on condition that the calculated value of intercooler efficiency is within the normal limits and the calculated value of the intake temperature at the intake manifold 7 deviates from the actually measured value, then conceivable are two causes thereof, that is, fault of intake manifold temperature sensor 19 and fault of the EGR exit temperature sensor 17.

If the former is the cause, i.e., if the intake manifold temperature sensor 19 has fault, then the calculated value of the EGR cooler efficiency not affected by the detected value of the intake manifold temperature sensor 19 is to be within the normal limits. If the latter is the cause, i.e., if the EGR exit temperature sensor 17 has fault, then the calculated value of the EGR cooler efficiency is to be outside the normal limits.

As a result, on condition that the calculated value of the intercooler efficiency is within the normal limits and the calculated value of the intake temperature at the intake manifold 7 deviates from the actually measured value thereof, if the calculated value of the EGR cooler efficiency is within the normal limits, then the intake manifold temperature sensor 19 for detection of the intake temperature at the intake manifold 7 can be determined to have fault whereas if the calculated value of the EGR cooler efficiency is outside the normal limits, then the EGR exit temperature sensor 17 for detection of the EGR gas temperature on the exit side of the EGR cooler 14 can be determined to have fault.

Specifically, on condition that the calculated value of the intercooler efficiency is within the normal limits and the calculated value of the intake temperature at the intake manifold 7 deviates high from the actually measured value thereof, if the calculated value of the EGR cooler efficiency is within the normal limits, then the intake manifold temperature sensor 19 can be determined to have characteristic fault of erroneously detecting the intake temperature higher than the actually measured value. On condition that the calculated value of intercooler efficiency is within the normal limits and the calculated value of the intake temperature at the intake manifold 7 deviates low from the actually measured value thereof, if the calculated value of the EGR cooler efficiency is within the normal limits, then the intake manifold temperature sensor 19 can be determined to have characteristic fault of erroneously detecting the intake temperature lower than the actually measured value.

By contrast, on condition that the calculated value of the intercooler efficiency is within the normal limits and the calculated value of the intake temperature of the intake manifold 7 deviates high from the actually measured value thereof, if the calculated value of EGR cooler efficiency is low outside the normal limits, then the EGR exit temperature sensor 17 can be determined to have characteristic fault of erroneously detecting the EGR gas temperature higher than the actually measured value. On condition that the calculated value of the intercooler efficiency is within normal limits and the calculated value of the intake temperature at the intake manifold 7 deviates low from the actually measured value thereof, if the calculated value of the EGR cooler efficiency is high outside the normal limits, then the EGR exit temperature sensor 17 can be determined to have characteristic fault of erroneously detecting the EGR gas temperature lower than the actually measured value.

Further, on condition that the calculated value of the intercooler efficiency is within the normal limits and the calculated value of the intake temperature at the intake manifold 7 does not deviate from the actually measured value thereof, if the calculated value of the EGR cooler efficiency is outside the normal limits, then the EGR cooler 14 itself is determined to have fault whereas if the calculated value of the EGR cooler efficiency is within the normal limits, all of the intercooler exit temperature sensor 18, the intercooler 6, the intake manifold temperature sensor 19, the EGR exit temperature sensor 17 and the EGR cooler 14 are determined to be normal.

Because, on condition that the calculated value of the intercooler efficiency is within the normal limits and the calculated value of the intake temperature at the intake manifold 7 does not deviate from the actually measured value thereof, the intake manifold temperature sensor 19 and the EGR exit temperature sensor 17 are conceived to be normal. On condition that the calculated value of the intercooler efficiency is within the normal limits and the calculated value of the intake temperature at the intake manifold 7 does not deviate from the actually measured value thereof, if the calculated value of the EGR cooler efficiency is outside the normal limits, then conceivable is only a cause thereof, i.e., fault of the EGR cooler 14 itself.

As a result, on condition that the calculated value of the intercooler efficiency is within the normal limits and the calculated value of the intake temperature at the intake manifold 7 does not deviate from the actually measured value thereof, if the calculated value of the EGR cooler efficiency is outside the normal limits, then the EGR cooler 14 itself can be determined to have fault.

On the other hand, on condition that the calculated value of the intercooler efficiency is within the normal limits and the calculated value of the intake temperature of the intake manifold 7 does not deviate from the actually measured value thereof, if the calculated value of the EGR cooler efficiency is within the normal limits, it can be conceived that no fault occurs at all. Thus, all of the intercooler exit temperature sensor 18, the intercooler 6, the intake manifold temperature sensor 19, the EGR exit temperature sensor 17 and the EGR cooler 14 can be determined to be normal.

It is needles to say that proper tuning is required for determination of the normal limits of the intercooler efficiency, of the normal limits of the EGR cooler efficiency and of any deflection for recognition of deviation of the actually measured value of the intake temperature at the intake manifold 7 from the actually measured value thereof so as to clearly determine any fault of the intercooler exit temperature sensor 18, the intake manifold temperature sensor 19, the EGR exit temperature sensor 17, the intercooler 6 and the EGR cooler 14 by comparing the three elements, i.e., the intercooler efficiency, the EGR cooler efficiency and any deviation of the calculated value of the intake temperature at the intake manifold 7 from the actually measured value thereof.

Thus, according to the above embodiment, comparison of the three elements, i.e., the intercooler efficiency, the EGR cooler efficiency and any deviation of the calculated value of the intake temperature at the intake manifold from the actually measured value thereof makes it possible to accurately determine whether any of the intercooler exit temperature sensor 18, the intake manifold temperature sensor 19, the EGR exit temperature sensor 17, the intercooler 6 and the EGR cooler 14 has fault while consideration is made on any possibility that the detected values are affected to be abnormal by deterioration with time of the intercooler and the EGR cooler. Establishment of such a fault detection method can contribute to formulation of an OBD system (On Board Diagnostic System) dealing with exhaust emission control technique expected to be further highly refined from now.

As to identification of any fault in intercooler exit temperature sensor 18, it is possible to go so far as to determine whether the intercooler exit temperature sensor 18 has characteristic fault of erroneously detecting the intake temperature higher or lower than an actual intake temperature. Further, as to identification of any fault in the intake manifold temperature sensor 19, it is possible to go so far as to determine whether the intake manifold temperature sensor 19 has characteristic fault of erroneously detecting the intake temperature higher or lower than an actual intake temperature. Further, as to identification of any fault in the EGR exit temperature sensor 17, it is possible to go so far as to determine whether the EGR exit temperature sensor 17 has characteristic fault of erroneously detecting the EGR gas temperature higher or lower than an actual EGR gas temperature.

It is to be understood that a fault detection method according to the invention is not limited to the above embodiment and that various changes and modifications may be made without departing from the scope of the invention.

Reference Signs List

| | |
|---|---|
| 1 | engine |
| 4 | intake |
| 6 | intercooler |
| 7 | intake manifold |
| 9 | exhaust gas |
| 9' | EGR gas |
| 14 | EGR cooler |
| 15 | cooling water |
| 16 | cooling water temperature sensor |
| 17 | EGR exit temperature sensor |
| 17a | detection signal |
| 18 | intercooler exit temperature sensor |
| 18a | detection signal |
| 19 | intake manifold temperature sensor |
| 19a | detection signal |
| 20 | intake temperature sensor |
| 20a | detection signal |

**Claims**

1. A fault detection method with a precondition that an intake temperature on an entry side of an intercooler, an ambient temperature, an EGR gas temperature on an entry side of an EGR cooler and a cooling water temperature into the EGR cooler have been determined to be normally detected, which comprises calculating intercooler efficiency on the basis of the intake temperature on the entry side of the intercooler, an intake temperature on an exit side of the intercooler and the ambient temperature, calculating EGR cooler efficiency on the basis of the EGR gas temperature on the entry side of the EGR cooler, an EGR gas temperature on an exit side of the EGR cooler and the cooling water temperature, and determining whether a calculated value of an intake temperature at an intake manifold on the basis of a current EGR ratio, the EGR gas temperature on the exit side of the EGR cooler and the intake temperature on the exit side of the intercooler deviates from an actually measured value thereof or not, and identifying a fault place in an intake system by comparing three elements mentioned in the above, i.e., the intercooler efficiency, the EGR cooler efficiency and any deviation of the calculated value of the intake temperature at the intake manifold from the actually measured value,

wherein, on condition that a calculated value of the intercooler efficiency is outside normal limits and a calculated value of the EGR cooler efficiency is within normal limits, if the calculated value of the intake temperature at the intake manifold deviates from the actually measured value thereof, an intercooler exit temperature sensor for detection of the intake temperature on the exit side of the intercooler is determined to have fault whereas if the calculated value of the intake temperature at the intake manifold does not deviate from the actually measured value thereof, the intercooler itself is determined to have fault;

on condition that the calculated value of the intercooler efficiency is within the normal limits and the calculated value of the intake temperature at the intake manifold deviates from the actually measured value thereof, if the calculated value of the EGR cooler efficiency is within the normal limits, an intake manifold temperature sensor for detection of the intake temperature at the intake manifold is determined to have fault whereas if the calculated value of the EGR cooler efficiency is outside the normal limits, an EGR exit temperature sensor for detection of the EGR gas temperature on the exit side of the EGR cooler is determined to have fault; and

on condition that the calculated value of the intercooler efficiency is within the normal limits and the calculated value of the intake temperature at the intake manifold does not deviate from the actually measured value thereof, if the calculated value of the EGR cooler efficiency is outside the normal limits, the EGR cooler itself is determined to have fault whereas if the calculated value of the EGR cooler efficiency is within the normal limits, all of the intercooler exit temperature sensor, the intercooler, the intake manifold temperature sensor, the EGR exit temperature sensor and the EGR cooler are determined to be normal.

2. The fault detection method as claimed in claim 1, wherein on condition that the calculated value of the intercooler efficiency is low outside the normal limits and the calculated value of the EGR cooler efficiency is within the normal limits, if the calculated value of the intake temperature at the intake manifold deviates high from the actually measured value thereof, then the intercooler exit temperature sensor is determined to have characteristic fault of erroneously detecting the intake temperature higher than an actual intake temperature whereas on condition that the calculated value of the intercooler efficiency is high outside the normal limits and the calculated value of the EGR cooler efficiency is within the normal limits, if the calculated value of the intake temperature at the intake manifold deviates low from the actually measured value thereof, the intercooler exit temperature sensor is determined to have characteristic fault of erroneously detecting the intake temperature lower than the actual intake temperature.

3. The fault detection method as claimed in claim 1, wherein, on condition that the calculated value of the intercooler efficiency is within the normal limits and the calculated value of the intake temperature at the intake manifold deviates high from the actually measured value thereof, if the calculated value of the EGR cooler efficiency is within the normal limits, then the intake manifold temperature sensor is determined to have characteristic fault of erroneously detecting the intake temperature higher than the actual intake temperature whereas on condition that the calculated value of the intercooler efficiency is within the normal limits and the calculated value of the intake temperature at the intake manifold deviates low from the actually measured value thereof, if the calculated value of the EGR cooler efficiency is within the normal limits, then the intake manifold temperature sensor is determined to have characteristic fault of erroneously detecting the intake temperature lower than the actual intake temperature.

4. The fault detection method as claimed in claim 2, wherein, on condition that the calculated value of the intercooler efficiency is within the normal limits and the calculated value of the intake temperature at the intake manifold deviates high from the actually measured value thereof, if the calculated value of the EGR cooler efficiency is within the normal limits, then the intake manifold temperature sensor is determined to have characteristic fault of erroneously detecting the intake temperature higher than the actual intake temperature whereas on condition that the calculated value of the intercooler efficiency is within the normal limits and the calculated value of the intake temperature at the intake manifold deviates low from the actually measured value thereof, if the calculated value of the EGR cooler efficiency is within the normal limits, then the intake manifold temperature sensor is determined to have characteristic fault of erroneously detecting the intake temperature lower than the actual intake temperature.

5. The fault detection method as claimed in claim 1, wherein, on condition that the calculated value of the intercooler efficiency is within the normal limits and the calculated value of the intake temperature at the intake manifold deviates high from the actually measured value thereof, if the calculated value of the EGR cooler efficiency is low outside the normal limits, then the EGR exit temperature sensor is determined to have characteristic fault of erroneously detecting the EGR gas temperature higher than the actual EGR gas temperature whereas on condition that the calculated value of the intercooler efficiency is within the normal limits and the calculated value of the intake temperature at the intake manifold deviates low from the actually measured value thereof, if the calculated value of the EGR cooler efficiency is high outside the normal limits, then the EGR exit temperature sensor is determined to have characteristic fault of erroneously detecting the EGR gas temperature lower than the actual EGR gas temperature.

6. The fault detection method as claimed in claim 2, wherein, on condition that the calculated value of the intercooler efficiency is within the normal limits and the calculated value of the intake temperature at the intake manifold deviates high from the actually measured value thereof, if the calculated value of the EGR cooler efficiency is low outside the normal limits, then the EGR exit temperature sensor is determined to have characteristic fault of erroneously detecting the EGR gas temperature higher than the actual EGR gas temperature whereas on condition that the calculated value of the intercooler efficiency is within the normal limits and the calculated value of the intake temperature at the intake manifold deviates low from the actually measured value thereof, if the calculated value of the EGR cooler efficiency is high outside the normal limits, then the EGR exit temperature sensor is determined to have characteristic fault of erroneously detecting the EGR gas temperature lower than the actual EGR gas temperature.

7. The fault detection method as claimed in claim 3 wherein, on condition that the calculated value of the intercooler efficiency is within the normal limits and the calculated value of the intake temperature at the intake manifold deviates high from the actually measured value thereof, if the calculated value of the EGR cooler efficiency is low outside the normal limits, then the EGR exit temperature sensor is determined to have characteristic fault of erroneously detecting the EGR gas temperature higher than the actual EGR gas temperature whereas on condition that the calculated value of the intercooler efficiency is within the normal limits and the calculated value of the intake temperature at the intake manifold deviates low from the actually measured value thereof, if the calculated value of the EGR cooler efficiency is high outside the normal limits, then the EGR exit temperature sensor is determined to have characteristic fault of erroneously detecting the EGR gas temperature lower than the actual EGR gas temperature.

8. The fault detection method as claimed in claim 4, wherein, on condition that the calculated value of the intercooler efficiency is within the normal limits and the calculated value of the intake temperature at the intake manifold deviates high from the actually measured value thereof, if the calculated value of the EGR cooler efficiency is low outside the normal limits, then the EGR exit temperature sensor is determined to have characteristic fault of erroneously detecting the EGR gas temperature higher than the actual EGR gas temperature whereas on condition that the calculated value of the intercooler efficiency is within the normal limits and the calculated value of the intake temperature at the intake manifold deviates low from the actually measured value thereof, if the calculated value of the EGR cooler efficiency is high outside the normal limits, then the EGR exit temperature sensor is determined to have characteristic fault of erroneously detecting the EGR gas temperature lower than the actual EGR gas temperature.

**Patentansprüche**

1. Fehlerdetektionsverfahren mit einer Vorbedingung, dass bestimmt wurde, dass eine Einlasstemperatur auf einer Eingangsseite eines Zwischenkühlers, eine Umgebungstemperatur, eine AGR-Gastemperatur auf einer Eingangsseite eines AGR-Kühlers und eine Kühlwassertemperatur in den AGR-Kühler normal detektiert wurden, welches umfasst, die Zwischenkühlereffizienz anhand der Einlasstemperatur auf der Eingangsseite des Zwischenkühlers, einer Einlasstemperatur auf einer Ausgangsseite des Zwischenkühlers und der Umgebungstemperatur zu berechnen, die AGR-Kühlereffizienz anhand der AGR-Gastemperatur auf der Eingangsseite des AGR-Kühlers, einer AGR-Gastemperatur auf einer Ausgangsseite des AGR-Kühlers und der Kühlwassertemperatur zu berechnen und zu bestimmen, ob ein berechneter Wert einer Einlasstemperatur an einem Ansaugrohr anhand eines aktuellen AGR-Verhältnisses, der AGR-Gastemperatur auf der Ausgangsseite des AGR-Kühlers und der Einlasstemperatur auf der Ausgangsseite des Zwischenkühlers von einem tatsächlich gemessenen Wert derselben abweicht oder nicht und einen Fehlerort in einem Einlasssystem zu identifizieren, indem drei Elemente, die oben erwähnt wurden, d. h. die Zwischenkühlereffizienz, die AGR-Kühlereffizienz und eine Abweichung des berechneten Werts der Einlasstemperatur an dem Ansaugrohr von dem tatsächlich gemessenen Wert verglichen werden,
wobei unter der Bedingung, dass ein berechneter Wert der Zwischenkühlereffizienz außerhalb normaler Grenzen liegt und ein berechneter Wert der AGR-Kühlereffizienz innerhalb normaler Grenzen liegt, dann, wenn der berechnete Wert der Einlasstemperatur an dem Ansaugrohr von dem tatsächlich gemessenen Wert derselben abweicht, bestimmt wird, dass ein Zwischenkühlerausgangstemperatursensor für die Detektion der Einlasstemperatur auf der Ausgangsseite des Zwischenkühlers einen Fehler aufweist, während dann, wenn der berechnete Wert der Einlasstemperatur an dem Ansaugrohr nicht von dem tatsächlich gemessenen Wert derselben abweicht, bestimmt wird, dass der Zwischenkühler selbst den Fehler aufweist;

unter der Bedingung, dass der berechnete Wert der Zwischenkühlereffizienz innerhalb der normalen Grenzen liegt und der berechnete Wert der Einlasstemperatur an dem Ansaugrohr von dem tatsächlich gemessenen Wert derselben abweicht, dann, wenn der berechnete Wert der AGR-Kühlereffizienz innerhalb der normalen Grenzen liegt, bestimmt wird, dass ein Ansaugrohrtemperatursensor für die Detektion der Einlasstemperatur an dem Ansaugrohr einen Fehler aufweist, während dann, wenn der berechnete Wert der AGR-Kühlereffizienz außerhalb der normalen Grenzen liegt, bestimmt wird, dass ein AGR-Ausgangstemperatursensor für die Detektion der AGR-Gastemperatur auf der Ausgangsseite des AGR-Kühlers einen Fehler aufweist; und

unter der Bedingung, dass der berechnete Wert der Zwischenkühlereffizienz innerhalb der normalen Grenzen liegt und der berechnete Wert der Einlasstemperatur an dem Ansaugrohr nicht von dem tatsächlich gemessenen Wert derselben abweicht, dann, wenn der berechnete Wert der AGR-Kühlereffizienz außerhalb der normalen Grenzen liegt, bestimmt wird, dass der AGR-Kühler selbst den Fehler aufweist, während dann, wenn der berechnete Wert der AGR-Kühlereffizienz innerhalb der normalen Grenzen liegt, bestimmt wird, dass alle von dem Zwischenkühlerausgangstemperatursensor, dem Zwischenkühler, dem Ansaugrohrtemperatursensor, dem AGR-Ausgangstemperatursensor und dem AGR-Kühler normal sind.

2. Fehlerdetektionsverfahren nach Anspruch 1, wobei unter der Bedingung, dass der berechnete Wert der Zwischenkühlereffizienz unterhalb der normalen Grenzen liegt und der berechnete Wert der AGR-Kühlereffizienz innerhalb der normalen Grenzen liegt, dann, wenn der berechnete Wert der Einlasstemperatur an dem Ansaugrohr nach oben von dem tatsächlich gemessenen Wert derselben abweicht, bestimmt wird, dass der Zwischenkühlerausgangstemperatursensor den charakteristischen Fehler aufweist, die Einlasstemperatur fälschlicherweise höher als eine tatsächliche Einlasstemperatur zu detektieren, während unter der Bedingung, dass der berechnete Wert der Zwischenkühlereffizienz oberhalb der normalen Grenzen liegt und der berechnete Wert der AGR-Kühlereffizienz innerhalb der normalen Grenzen liegt, dann, wenn der berechnete Wert der Einlasstemperatur an dem Ansaugrohr nach unten von dem tatsächlich gemessenen Wert derselben abweicht, bestimmt wird, dass der Zwischenkühlerausgangstemperatursensor den charakteristischen Fehler aufweist, die Einlasstemperatur fälschlicherweise tiefer als die tatsächliche Einlasstemperatur zu detektieren.

3. Fehlerdetektionsverfahren nach Anspruch 1, wobei unter der Bedingung, dass der berechnete Wert der Zwischenkühlereffizienz innerhalb der normalen Grenzen liegt und der berechnete Wert der Einlasstemperatur an dem Ansaugrohr nach oben von dem tatsächlich gemessenen Wert derselben abweicht, dann, wenn der berechnete Wert der AGR-Kühlereffizienz innerhalb der normalen Grenzen liegt, bestimmt wird, dass der Ansaugrohrtemperatursensor den charakteristischen Fehler aufweist, die Einlasstemperatur fälschlicherweise höher als die tatsächliche Einlasstemperatur zu detektieren, während unter der Bedingung, dass der berechnete Wert der Zwischenkühlereffizienz innerhalb der normalen Grenzen liegt und der berechnete Wert der Einlasstemperatur an dem Ansaugrohr nach unten von dem tatsächlich gemessenen Wert derselben abweicht, dann, wenn der berechnete Wert der AGR-Kühlereffizienz innerhalb der normalen Grenzen liegt, bestimmt wird, dass der Ansaugrohrtemperatursensor den charakteristischen Fehler aufweist, die Einlasstemperatur fälschlicherweise tiefer als die tatsächliche Einlasstemperatur zu detektieren.

4. Fehlerdetektionsverfahren nach Anspruch 2, wobei unter der Bedingung, dass der berechnete Wert der Zwischenkühlereffizienz innerhalb der normalen Grenzen liegt und der berechnete Wert der Einlasstemperatur an dem Ansaugrohr nach oben von dem tatsächlich gemessenen Wert derselben abweicht, dann, wenn der berechnete Wert der AGR-Kühlereffizienz innerhalb der normalen Grenzen liegt, bestimmt wird, dass der Ansaugrohrtemperatursensor den charakteristischen Fehler aufweist, die Einlasstemperatur fälschlicherweise höher als die tatsächliche Einlasstemperatur zu detektieren, während unter der Bedingung, dass der berechnete Wert der Zwischenkühlereffizienz innerhalb der normalen Grenzen liegt und der berechnete Wert der Einlasstemperatur an dem Ansaugrohr nach unten von dem tatsächlich gemessenen Wert derselben abweicht, dann, wenn der berechnete Wert der AGR-Kühlereffizienz innerhalb der normalen Grenzen liegt, bestimmt wird, dass der Ansaugrohrtemperatursensor den charakteristischen Fehler aufweist, die Einlasstemperatur fälschlicherweise tiefer als die tatsächliche Einlasstemperatur zu detektieren.

5. Fehlerdetektionsverfahren nach Anspruch 1, wobei unter der Bedingung, dass der berechnete Wert der Zwischenkühlereffizienz innerhalb der normalen Grenzen liegt und der berechnete Wert der Einlasstemperatur an dem Ansaugrohr nach oben von dem tatsächlich gemessenen Wert derselben abweicht, dann, wenn der berechnete Wert der AGR-Kühlereffizienz unterhalbe der normalen Grenzen liegt, bestimmt wird, dass der AGR-Ausgangstemperatursensor den charakteristischen Fehler aufweist, die AGR-Gastemperatur fälschlicherweise höher als die tatsächliche AGR-Gastemperatur zu detektieren, während unter der Bedingung, dass der berechnete Wert der Zwischenkühlereffizienz innerhalb der normalen Grenzen liegt und der berechnete Wert der Einlasstemperatur an dem Ansaugrohr nach unten von dem tatsächlich gemessenen Wert derselben abweicht, dann, wenn der berechnete Wert der AGR-Kühlereffizienz oberhalb der normalen Grenzen liegt, bestimmt wird, dass der AGR-Ausgangstemperatursensor den charakteristischen Fehler aufweist, die AGR-Gastemperatur fälschlicherweise tiefer als die tatsächliche AGR-Gastemperatur zu detektieren.

6. Fehlerdetektionsverfahren nach Anspruch 2, wobei unter der Bedingung, dass der berechnete Wert der Zwischenkühlereffizienz innerhalb der normalen Grenzen liegt und der berechnete Wert der Einlasstemperatur an dem Ansaugrohr nach oben von dem tatsächlich gemessenen Wert derselben abweicht, dann, wenn der berechnete Wert der AGR-Kühlereffizienz unterhalb der normalen Grenzen liegt, bestimmt wird, dass der AGR-Ausgangstemperatursensor den charakteristischen Fehler aufweist, die AGR-Gastemperatur fälschlicherweise höher als die tatsächliche AGR-Gastemperatur zu detektieren, während unter der Bedingung, dass der berechnete Wert der Zwischenkühlereffizienz innerhalb der normalen Grenzen liegt und der berechnete Wert der Einlasstemperatur an dem Ansaugrohr nach unten von dem tatsächlich gemessenen Wert derselben abweicht, dann, wenn der berechnete Wert der AGR-Kühlereffizienz oberhalb der normalen Grenzen liegt, bestimmt wird, dass der AGR-Ausgangstemperatursensor den charakteristischen Fehler aufweist, die AGR-Gastemperatur fälschlicherweise tiefer als die tatsächliche AGR-Gastemperatur detektiert.

7. Fehlerdetektionsverfahren nach Anspruch 3, wobei unter der Bedingung, dass der berechnete Wert der Zwischenkühlereffizienz innerhalb der normalen Grenzen liegt und der berechnete Wert der Einlasstemperatur an dem Ansaugrohr nach oben von dem tatsächlich gemessenen Wert derselben abweicht, dann, wenn der berechnete Wert der AGR-Kühlereffizienz unterhalb der normalen Grenzen liegt, bestimmt wird, dass der AGR-Ausgangstemperatursensor den charakteristischen Fehler aufweist, die AGR-Gastemperatur fälschlicherweise höher als die tatsächliche AGR-Gastemperatur zu detektieren, während unter der Bedingung, dass der berechnete Wert der Zwischenkühlereffizienz innerhalb der normalen Grenzen liegt und der berechnete Wert der Einlasstemperatur an dem Ansaugrohr nach unten von dem tatsächlich gemessenen Wert derselben abweicht, dann, wenn der berechnete Wert der AGR-Kühlereffizienz oberhalb der normalen Grenzen liegt, bestimmt wird, dass der AGR-Ausgangstemperatursensor den charakteristischen Fehler aufweist, die AGR- Gastemperatur fälschlicherweise tiefer als die tatsächliche AGR-Gastemperatur zu detektieren.

8. Fehlerdetektionsverfahren nach Anspruch 4, wobei unter der Bedingung, dass der berechnete Wert der Zwischenkühlereffizienz innerhalb der normalen Grenzen liegt und der berechnete Wert der Einlasstemperatur an dem Ansaugrohr nach oben von dem tatsächlich gemessenen Wert derselben abweicht, dann, wenn der berechnete Wert der AGR-Kühlereffizienz unterhalb der normalen Grenzen liegt, bestimmt wird, dass der AGR-Ausgangstemperatursensor den charakteristischen Fehler aufweist, die AGR-Gastemperatur fälschlicherweise höher als die tatsächliche AGR-Gastemperatur zu detektieren, während unter der Bedingung, dass der berechnete Wert der Zwischenkühlereffizienz innerhalb der normalen Grenzen liegt und der berechnete Wert der Einlasstemperatur an dem Ansaugrohr nach unten von dem tatsächlich gemessenen Wert derselben abweicht, dann, wenn der berechnete Wert der AGR-Kühlereffizienz oberhalb der normalen Grenzen liegt, bestimmt wird, dass der AGR-Ausgangstemperatursensor den charakteristischen Fehler aufweist, die AGR-Gastemperatur fälschlicherweise tiefer als die tatsächliche AGR-Gastemperatur zu detektieren.

**Revendications**

1. Procédé de détection de défaut avec une condition préalable qu'il ait été déterminé qu'une température d'admission d'un côté d'entrée d'un refroidisseur d'air de suralimentation, qu'une température ambiante, qu'une température de gaz d'EGR d'un côté d'entrée d'un dispositif de refroidissement d'EGR et qu'une température d'eau de refroidissement dans le dispositif de refroidissement d'EGR ont été détectées normalement, qui comprend le calcul du rendement du refroidisseur d'air de suralimentation sur la base de la température d'admission du côté d'entrée du refroidisseur d'air de suralimentation, d'une température d'admission d'un côté de sortie du refroidisseur d'air de suralimentation et de la température ambiante, le calcul du rendement du dispositif de refroidissement d'EGR sur la base de la température de gaz d'EGR du côté d'entrée du dispositif de refroidissement d'EGR, d'une température de gaz d'EGR d'un côté de sortie du dispositif de refroidissement d'EGR et de la température d'eau de refroidissement, et la détermination qu'une valeur calculée d'une température d'admission au niveau d'un collecteur d'admission sur la base du rapport d'EGR actuel, de la température de gaz d'EGR du côté de sortie du dispositif de refroidissement d'EGR et de la température d'admission du côté de sortie du refroidisseur d'air de suralimentation s'écarte d'une valeur réellement mesurée de celle-ci ou non, et l'identification d'un emplacement de défaut dans un système d'admission en comparant trois éléments mentionnés ci-dessus, c'est-à-dire le rendement du refroidisseur d'air de suralimentation, le rendement du dispositif de refroidissement d'EGR et l'écart de la valeur calculée de la température d'admission au niveau du collecteur d'admission par rapport à la valeur réellement mesurée,

dans lequel, dans une condition où une valeur calculée du rendement du refroidisseur d'air de suralimentation est à l'extérieur des limites normales et ou une valeur calculée du rendement du dispositif de refroidissement d'EGR est dans les limites des limites normales, si la valeur calculée de la température d'admission au niveau du collecteur d'admission s'écarte de la valeur réellement mesurée de celle-ci, il est déterminé qu'un capteur de température de sortie de refroidisseur d'air de suralimentation pour détecter la température d'admission du côté de sortie du refroidisseur d'air de suralimentation présente un défaut, tandis que, si la valeur calculée de la température d'admission au niveau du collecteur d'admission ne s'écarte pas de la valeur réellement mesurée de celle-ci, il est déterminé que le refroidisseur d'air de suralimentation lui-même présente un défaut ;

dans une condition où la valeur calculée du rendement du refroidisseur d'air de suralimentation est dans les limites des limites normales et où la valeur calculée de la température d'admission au niveau du collecteur d'admission s'écarte de la valeur réellement mesurée de celle-ci, si la valeur calculée du rendement du dispositif de refroidissement d'EGR est dans les limites des limites normales, il est déterminé qu'un capteur de température de collecteur d'admission pour détecter la température d'admission au niveau du collecteur d'admission présente un défaut, tandis que, si la valeur calculée du rendement du dispositif de refroidissement d'EGR est à l'extérieur des limites normales, il est déterminé qu'un capteur de température de sortie d'EGR pour détecter la température de gaz d'EGR du côté de sortie du dispositif de refroidissement d'EGR présente un défaut ; et

dans une condition où la valeur calculée du rendement du refroidisseur d'air de suralimentation est dans les limites des limites normales et où la valeur calculée de la température d'admission au niveau du collecteur d'admission ne s'écarte pas de la valeur réellement mesurée de celle-ci, si la valeur calculée du rendement du dispositif de refroidissement d'EGR est à l'extérieur des limites normales, il est déterminé que le dispositif de refroidissement d'EGR lui-même présente un défaut, tandis que, si la valeur calculée du rendement du dispositif de refroidissement d'EGR est dans les limites des limites normales, il est déterminé que le capteur de température de sortie de refroidisseur d'air de suralimentation, le refroidisseur d'air de suralimentation, le capteur de température de collecteur d'admission, le capteur de température de sortie d'EGR et le dispositif de refroidissement d'EGR sont normaux.

2. Procédé de détection de défaut selon la revendication 1, dans lequel, dans une condition où la valeur calculée du rendement du refroidisseur d'air de suralimentation est diminuée à l'extérieur des limites normales et où la valeur calculée du rendement du dispositif de refroidissement d'EGR est dans les limites des limites normales, si la valeur calculée de la température d'admission au niveau du collecteur d'admission s'écarte au-dessus de la valeur réellement mesurée de celle-ci, alors il est déterminé que le capteur de température de sortie de refroidisseur d'air de suralimentation présente un défaut caractéristique consistant à détecter de manière erronée une température d'admission supérieure à une température d'admission réelle, tandis que, dans une condition où la valeur calculée du rendement du refroidisseur d'air de suralimentation est élevée à l'extérieur des limites normales et où la valeur calculée du rendement du dispositif de refroidissement d'EGR est dans les limites des limites normales, si la valeur calculée de la température d'admission au niveau du collecteur d'admission s'écarte en dessous de la valeur réellement mesurée de celle-ci, il est déterminé que le capteur de température de sortie de refroidisseur d'air de suralimentation présente un défaut caractéristique consistant à détecter de manière erronée une température d'admission inférieure à la température d'admission réelle.

3. Procédé de détection de défaut selon la revendication 1, dans lequel, dans une condition où la valeur calculée du rendement du refroidisseur d'air de suralimentation est dans les limites des limites normales et où la valeur calculée de la température d'admission au niveau du collecteur d'admission s'écarte au-dessus de la valeur réellement mesurée de celle-ci, si la valeur calculée du rendement du dispositif de refroidissement d'EGR est dans les limites des limites normales, alors il est déterminé que le capteur de température de collecteur d'admission présente un défaut caractéristique consistant à détecter de manière erronée une température d'admission supérieure à la température d'admission réelle, tandis que, dans une condition où la valeur calculée du rendement du refroidisseur d'air de suralimentation est dans les limites des limites normales et où la valeur calculée de la température d'admission au niveau du collecteur d'admission s'écarte en dessous de la valeur réellement mesurée de celle-ci, si la valeur calculée du rendement du dispositif de refroidissement d'EGR est dans les limites des limites normales, alors il est déterminé que le capteur de température de collecteur d'admission présente un défaut caractéristique consistant à détecter de manière erronée une température d'admission inférieure à la température d'admission réelle.

**4.** Procédé de détection de défaut selon la revendication 2, dans lequel, dans une condition où la valeur calculée du rendement du refroidisseur d'air de suralimentation est dans les limites des limites normales et où la valeur calculée de la température d'admission au niveau du collecteur d'admission s'écarte au-dessus de la valeur réellement mesurée de celle-ci, si la valeur calculée du rendement du dispositif de refroidissement d'EGR est dans les limites des limites normales, alors il est déterminé que le capteur de température de collecteur d'admission présente un défaut caractéristique consistant à détecter de manière erronée une température d'admission supérieure à la température d'admission réelle, tandis que, dans une condition où la valeur calculée du rendement du refroidisseur d'air de suralimentation est dans les limites des limites normales et où la valeur calculée de la température d'admission au niveau du collecteur d'admission s'écarte en dessous de la valeur réellement mesurée de celle-ci, si la valeur calculée du rendement du dispositif de refroidissement d'EGR est dans les limites des limites normales, alors il est déterminé que le capteur de température de collecteur d'admission présente un défaut caractéristique consistant à détecter de manière erronée une température d'admission inférieure à la température d'admission réelle.

**5.** Procédé de détection de défaut selon la revendication 1, dans lequel, dans une condition où la valeur calculée du rendement du refroidisseur d'air de suralimentation est dans les limites des limites normales et où la valeur calculée de la température d'admission au niveau du collecteur d'admission s'écarte au-dessus de la valeur réellement mesurée de celle-ci, si la valeur calculée du rendement du dispositif de refroidissement d'EGR est diminuée à l'extérieur des limites normales, alors il est déterminé que le capteur de température de sortie d'EGR présente un défaut caractéristique consistant à détecter de manière erronée une température de gaz d'EGR supérieure à la température de gaz d'EGR réelle, tandis que, dans une condition où la valeur calculée du rendement du refroidisseur d'air de suralimentation est dans les limites des limites normales et où la valeur calculée de la température d'admission au niveau du collecteur d'admission s'écarte en dessous de la valeur réellement mesurée de celle-ci, si la valeur calculée du rendement du dispositif de refroidissement d'EGR est élevée à l'extérieur des limites normales, alors il est déterminé que le capteur de température de sortie d'EGR présente un défaut caractéristique consistant à détecter de manière erronée une température de gaz d'EGR inférieure à la température de gaz d'EGR réelle.

**6.** Procédé de détection de défaut selon la revendication 2, dans lequel, dans une condition où la valeur calculée du rendement du refroidisseur d'air de suralimentation est dans les limites des limites normales et où la valeur calculée de la température d'admission au niveau du collecteur d'admission s'écarte au-dessus de la valeur réellement mesurée de celle-ci, si la valeur calculée du rendement du dispositif de refroidissement d'EGR est diminuée à l'extérieur des limites normales, alors il est déterminé que le capteur de température de sortie d'EGR présente un défaut caractéristique consistant à détecter de manière erronée une température de gaz d'EGR supérieure à la température de gaz d'EGR réelle, tandis que, dans une condition où la valeur calculée du rendement du refroidisseur d'air de suralimentation est dans les limites des limites normales et où la valeur calculée de la température d'admission au niveau du collecteur d'admission s'écarte en dessous de la valeur réellement mesurée de celle-ci, si la valeur calculée du rendement du dispositif de refroidissement d'EGR est élevée à l'extérieur des limites normales, alors il est déterminé que le capteur de température de sortie d'EGR présente un défaut caractéristique consistant à détecter de manière erronée une température de gaz d'EGR inférieure à la température de gaz d'EGR réelle.

**7.** Procédé de détection de défaut selon la revendication 3, dans lequel, dans une condition où la valeur calculée du rendement du refroidisseur d'air de suralimentation est dans les limites des limites normales et où la valeur calculée de la température d'admission au niveau du collecteur d'admission s'écarte au-dessus de la valeur réellement mesurée de celle-ci, si la valeur calculée du rendement du dispositif de refroidissement d'EGR est diminuée à l'extérieur des limites normales, alors il est déterminé que le capteur de température de sortie d'EGR présente un défaut caractéristique consistant à détecter de manière erronée une température de gaz d'EGR supérieure à la température de gaz d'EGR réelle, tandis que, dans une condition où la valeur calculée du rendement du refroidisseur d'air de suralimentation est dans les limites des limites normales et où la valeur calculée de la température d'admission au niveau du collecteur d'admission s'écarte en dessous de la valeur réellement mesurée de celle-ci, si la valeur calculée du rendement du dispositif de refroidissement d'EGR est élevée à l'extérieur des limites normales, alors il est déterminé que le capteur de température de sortie d'EGR présente un défaut caractéristique consistant à détecter de manière erronée une température de gaz d'EGR inférieure à la température de gaz d'EGR réelle.

**8.** Procédé de détection de défaut selon la revendication 4, dans lequel, dans une condition où la valeur calculée du rendement du refroidisseur d'air de suralimentation est dans les limites des limites normales et où la valeur calculée de la température d'admission au niveau du collecteur d'admission s'écarte au-dessus de la valeur réellement mesurée de celle-ci, si la valeur calculée du rendement du dispositif de refroidissement d'EGR est diminuée à l'extérieur des limites normales, alors il est déterminé que le capteur de température de sortie d'EGR présente un défaut caractéristique consistant à détecter de manière erronée une température de gaz d'EGR supérieure à la température de gaz d'EGR réelle, tandis que, dans une condition où la valeur calculée du rendement du refroidisseur d'air de suralimentation est dans les limites des limites normales et où la valeur calculée de la température d'admission au niveau du collecteur d'admission s'écarte en dessous de la valeur réellement mesurée de celle-ci, si la valeur calculée du rendement du dispositif de refroidissement d'EGR est élevée à l'extérieur des limites normales, alors il est déterminé que le capteur de température de sortie d'EGR présente un défaut caractéristique consistant à détecter de manière erronée une température de gaz d'EGR inférieure à la température de gaz d'EGR réelle.

FIG. 1

FIG. 2

| CALCULATED ITEMS / FAULTS | INTERCOOLER EFFICIENCY | EGR COOLER EFFICIENCY | CALCULATED TEMPERATURE AT INTAKE MANIFOLD |
|---|---|---|---|
| CHARACTERISTIC FAULT (TO HIGHNESS) OF INTERCOOLER EXIT TEMPERATURE SENSOR | LOW | NORMAL | HIGH |
| CHARACTERISTIC FAULT (TO LOWNESS) OF INTERCOOLER EXIT TEMPERATURE SENSOR | HIGH | NORMAL | LOW |
| DETERIORATION OF INTERCOOLER BODY | LOW | NORMAL | NORMAL |
| CHARACTERISTIC FAULT (TO HIGHNESS) OF INTAKE MANIFOLD TEMPERATURE SENSOR | NORMAL | NORMAL | HIGH |
| CHARACTERISTIC FAULT (TO LOWNESS) OF INTAKE MANIFOLD TEMPERATURE SENSOR | NORMAL | NORMAL | LOW |
| CHARACTERISTIC FAULT (TO HIGHNESS) OF EGR COOLER EXIT TEMPERATURE SENSOR | NORMAL | LOW | HIGH |
| CHARACTERISTIC FAULT (TO LOWNESS) OF EGR COOLER EXIT TEMPERATURE SENSOR | NORMAL | HIGH | LOW |
| DETERIORATION OF EGR COOLER BODY | NORMAL | LOW | NORMAL |
| NO FAULTS | NORMAL | NORMAL | NORMAL |

FIG. 3

**EP 2 857 664 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010151039 A